# FASCICULE DE BREVET EUROPEEN

(11) **EP 3 233 748 B1**
(45) Date de publication et mention de la délivrance du brevet: **25.11.2020**
(21) Numéro de dépôt: 15823645.5
(22) Date de dépôt: 14.12.2015
(51) Int. Cl.: C03C 17/36

(54) **VITRAGE CONTRÔLE SOLAIRE OU BAS ÉMISSIF COMPRENANT UNE COUCHE DE PROTECTION SUPÉRIEURE**
SONNENSCHUTZVERGLASUNG ODER VERGLASUNG MIT GERINGER EMISSIVITÄT MIT EINER OBEREN SCHUTZSCHICHT
SOLAR-CONTROL OR LOW-EMISSIVITY GLAZING COMPRISING AN UPPER PROTECTIVE LAYER

(30) Priorité: 19.12.2014 FR 1462871
(43) Date de publication de la demande: 25.10.2017
(73) Titulaire: SAINT-GOBAIN GLASS FRANCE, 92400 Courbevoie (FR)
(72) Inventeur: MAILLET, Alexandre, 60200 Compiegne (FR); SINGH, Laura Jane, 75019 Paris (FR)
(74) Mandataire: Saint-Gobain Recherche
(86) Numéro de dépôt international: PCT/FR2015/053473
(87) Numéro de publication internationale: WO 2016/097557

(56) Documents cités:
- WO-A1-2009/115596
- WO-A1-2014/125083
- WO-A2-2014/191472
- WO-A2-2014/191474

## Description

L'invention concerne un matériau et un procédé d'obtention d'un matériau, tel qu'un vitrage, comprenant un substrat transparent revêtu d'un empilement de couches minces comprenant au moins une couche métallique fonctionnelle à base d'argent.

Les matériaux comprenant des couches métalliques fonctionnelles à base d'argent (ou couches d'argent) sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule de par leurs propriétés de conduction électrique et de réflexion des rayonnements infrarouges (IR) avantageuses.

La résistance chimique et mécanique des empilements comprenant ces couches métalliques fonctionnelles à base d'argent est souvent insuffisante. Cette faible résistance se traduit par l'apparition à court terme de défauts tels que des points de corrosion, des rayures, voire de l'arrachement total ou partiel de l'empilement lors de son utilisation dans des conditions normales. Tous défauts ou rayures, qu'ils soient dus à la corrosion ou à des sollicitations mécaniques, sont susceptibles d'altérer non seulement l'esthétique du substrat revêtu mais également ses performances optiques et énergétiques.

Ces substrats revêtus ne sont en général pas suffisamment résistants pour être utilisés dans des applications où l'empilement est directement au contact d'un milieu non contrôlé tel que l'air ambiant dans le cas de simples vitrages.

En revanche, ces substrats peuvent être utilisés sous forme de vitrages multiples, doubles ou triples. L'empilement est alors positionné à l'intérieur du vitrage multiple, au contact d'un milieu étanche constitué du gaz de la lame intercalaire. L'empilement est ainsi protégé de l'humidité et des poussières.

Pour améliorer encore davantage la résistance mécanique et chimique dans une configuration en vitrage multiple, le substrat revêtu de l'empilement peut être margé. Cela consiste à supprimer en périphérie du substrat, sur une zone d'au moins 1 mm de largeur, une ou plusieurs couches minces pour que celles-ci n'atteignent pas les bords du substrat et ainsi éviter des phénomènes de corrosion.

La limitation de l'utilisation de ces matériaux aux vitrages multiples associés à la nécessité de marger les substrats revêtus demeurent des inconvénients importants qui réduisent l'intérêt de ces matériaux.

De plus, même en cas d'une utilisation en vitrage multiple, les substrats revêtus subissent avant assemblage des étapes de transformation diverses telles que des étapes de découpe, de lavage, de façonnage des bords et/ou de traitements thermiques à température élevée de type trempe, recuit et/ou bombage. Il est courant et pratique de réaliser l'assemblage et/ou les traitements divers sur un lieu autre que celui où est fabriqué le substrat revêtu de l'empilement. Ces substrats subissent donc également des étapes de stockage et de transport dans des conditions climatiques variables.

Les substrats revêtus des empilements sont soumis, lors de ces différentes étapes, à des sollicitations mécaniques et chimiques résultant de conditions très différentes définies notamment par la température, l'humidité et la nature des espèces constituant le milieu au contact de l'empilement.

Les principaux facteurs susceptibles de détériorer les empilements lors d'un traitement thermique à température élevée sont différents des facteurs intervenant lors de l'utilisation normale du substrat pour son application dédiée ou lors d'un stockage. Lors d'un traitement à température élevée, ces facteurs sont la température en général supérieure à 400 °C, la pression et la nature des espèces chimiques susceptibles d'être au contact de l'empilement. Lors de l'utilisation normale ou du stockage, ces facteurs sont la durée de stockage ou de vie recherchée, les caractéristiques du milieu au contact de l'empilement telles que l'humidité, la température en général inférieure à 100 °C et la présence éventuelle de poussière.

Des couches supérieures de protection sont classiquement utilisées à diverses fins, notamment pour améliorer la résistance aux rayures ou protéger l'empilement lors de traitements thermiques à température élevée. Cependant, la protection assurée par les couches supérieures de protection connues est en général insuffisante :
- pour permettre une utilisation du matériau sans apparition de défauts ou de rayures et/ou modification des performances optiques et énergétiques pendant une durée suffisante notamment supérieure à 12 mois avant trempe et 30 jours après trempe,
- pour garantir une qualité constante du matériau indépendamment des conditions de stockage telles que la température, l'humidité et la durée.

Le brevet EP0937013B1 divulgue des substrats revêtus d'empilements destinés à subir un traitement à température élevée de type trempe ou recuit comprenant classiquement :
- des couches diélectriques à base de nitrure de silicium, situées au-dessus d'une couche métallique fonctionnelle à base d'argent, dont la fonction est de protéger de l'oxydation les couches sous-jacentes,
- des couches supérieures de protection, situées au-dessus des couches de nitrure de silicium, pour prévenir leur détérioration d'une attaque chimique par des espèces agressives à haute température telles que des composés alcalins.

Ces couches supérieures de protection sont déposées sous forme d'un métal ou d'un oxyde métallique choisi parmi au moins l'un des métaux suivants : Nb, Sn, Ta, Ti, Zr ou des oxydes suivants : oxyde de niobium, oxyde d'étain, oxyde de tantale, oxyde de titane, oxyde de zirconium. Selon le brevet EP0937013B1, ces métaux, tout particulièrement le niobium, l'étain et le titane, ont pour point commun de former, en s'oxydant, un composé avec le sodium de manière à limiter sa diffusion dans les couches sous-jacentes.

Les couches à base d'oxyde de titane permettent d'obtenir une protection efficace de l'empilement suite à un traitement thermique à température élevée ainsi qu'une bonne résistance mécanique. Cependant, les substrats revêtus de telles couches de protection sont sujets à la corrosion à froid en milieu humide lorsque l'empilement n'est pas emprisonné dans un double vitrage et lors des différentes étapes de stockage et/ou de transformation.

WO 2014/191472 divulgue un substrat revêtu d'empilement bas émissif.

Il existe un besoin de protéger plus efficacement les substrats revêtus d'empilements comprenant des couches fonctionnelles à base d'argent pendant les étapes de fabrication, de transformation, de transport et/ou de stockage. Plus particulièrement, il existe un besoin de développer de nouveaux empilements résistants à la fois aux traitements thermiques à température élevée mais également à la corrosion à froid. L'objectif de l'invention est notamment de mettre au point des matériaux à base des couches fonctionnelles à base d'argent pouvant être utilisés :
- indépendamment des conditions de stockage du matériau telles que la durée, la température et l'humidité, et/ou
- en simple vitrage ou en double vitrage sans nécessiter d'être margés.

Le demandeur a découvert de manière surprenante que l'utilisation comme couche supérieure de protection d'une couche d'oxyde de titane et de zirconium présentant un rapport en poids de titane sur zirconium particulier permet d'atteindre ces objectifs en améliorant considérablement la résistance à la corrosion à froid tout en conservant une bonne résistance au traitement thermique à température élevée et une bonne résistance mécanique.

L'invention concerne un matériau selon la revendication 1.

La couche de protection supérieure à base d'oxyde de titane et de zirconium présente, par ordre de préférence croissant, un rapport en poids de titane sur zirconium Ti/Zr compris entre 60/40 et 80/20, entre 60/40 et 70/30, entre 60/40 et 65/35 ou entre 60/40 et 64/36.

La couche de protection supérieure à base d'oxyde de titane et de zirconium présente par ordre de préférence croissant un rapport atomique de titane sur zirconium Ti/Zr compris entre 70/30 et 95/5, entre 70/30 et 85/15, entre 70/30 et 80/20.

Les couches d'oxyde de titane et de zirconium peuvent être déposées à partir d'une cible céramique de TiZrOx. Le rapport de titane sur zirconium Ti/Zr dans la couche est quasiment équivalent à celui de la cible.

Les cibles céramiques peuvent éventuellement comprendre d'autres éléments que l'on retrouve dans les couches déposées à partir de ces cibles.

La couche de protection supérieure est de préférence la dernière couche de l'empilement, c'est-à-dire la couche la plus éloignée du substrat revêtu de l'empilement.

La couche de protection supérieure a une épaisseur :
- inférieure ou égale à 10 nm, inférieure ou égale à 7 nm ou inférieure ou égale à 5 nm, et/ou
- supérieure ou égale à 1 nm, supérieure ou égale à 2 nm ou supérieure ou égale à 3 nm.

La couche diélectrique à base de nitrure de silicium et/ou d'aluminium est au-contact de la couche de protection supérieure à base d'oxyde de titane et de zirconium.

La couche diélectrique à base de nitrure de silicium et/ou d'aluminium a une épaisseur :
- inférieure ou égale à 100 nm, inférieure ou égale à 50 nm ou inférieure ou égale à 40 nm, et/ou
- supérieure ou égale à 25 nm.

Les couches d'argent sont déposées entre des revêtements diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

De préférence, l'empilement de couches minces comprend une seule couche fonctionnelle.

L'empilement de couches minces comprend une ou plusieurs couches d'oxydes. Cependant, l'épaisseur totale de toutes les couches d'oxydes présente dans l'empilement est inférieure à 10 nm, de préférence inférieure à 5 nm. Un empilement selon l'invention, présentant cette caractéristique présente les meilleurs résultats en termes de :
- résistance à l'humidité et au stockage, de traduisant par une absence de défaut et de variations de propriétés électriques et colorimétriques, et/ou,
- résistance mécanique, et/ou
- résistance à un traitement thermique longue durée.

L'empilement est déposé par pulvérisation cathodique, notamment assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche métallique fonctionnelle à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

L'empilement peut comprendre au moins une couche de blocage dont la fonction est de protéger les couches d'argent en évitant une éventuelle dégradation liée au dépôt d'un revêtement diélectrique ou liée à un traitement thermique. Ces couches de blocages sont situées de préférence au-contact des couches métalliques fonctionnelles à base d'argent.

L'empilement peut comprendre au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,3 nm ou d'au moins 0,8 nm et/ou
- d'au plus 5,0 nm ou d'au plus 2,0 nm.

Les revêtements diélectriques présentent une épaisseur supérieure à 15 nm, de préférence comprise entre 15 et 50 nm et mieux de 30 à 40 nm.

Les couches diélectriques des revêtements diélectriques présentent les caractéristiques suivantes seules ou en combinaison :
- elles sont déposées par pulvérisation cathodique assistée par champ magnétique,
- elles sont choisies parmi les couches diélectriques à fonction barrière,
- elles sont choisies parmi les couches diélectriques à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence supérieure à 15nm, comprise entre 15 et 50 nm et mieux de 30 à 40 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation, l'empilement comprend :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

Selon un mode de réalisation, l'empilement comprend :
- un revêtement diélectrique situé en-dessous de la couche métallique fonctionnelle à base d'argent comprenant au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

Les substrats transparents selon l'invention sont de préférence en un matériau rigide minéral, comme en verre, notamment silico-sodo-calcique. L'épaisseur du substrat varie généralement entre 0,5 mm et 19 mm. L'épaisseur du substrat est de préférence inférieure ou égale à 6 mm, voire 4 mm.

Le matériau, c'est-à-dire le substrat transparent revêtu de l'empilement, peut être destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le matériau peut être sous forme de vitrage monolithique, de vitrage feuilleté ou d'un vitrage multiple notamment un double-vitrage ou un triple vitrage.

Le matériau de l'invention convient dans toutes applications nécessitant l'utilisation d'un empilement comprenant des couches d'argent pour lesquelles la résistance au traitement thermique et à la corrosion à froid sont des paramètres clés telles que les vitrages bas émissif pour le bâtiment, les vitrages pour porte de réfrigérateur.

L'invention concerne également un procédé selon la revendication 13.

Le procédé peut comprendre en outre l'étape pendant laquelle on soumet le substrat revêtu de l'empilement de couches minces à un traitement thermique à une température supérieure à 400 °C, de préférence 500 °C.

### Exemples

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous

Les couches d'oxyde de titane et de zirconium sont déposées à partir d'une cible céramique de TiZrOx. Le rapport titane sur zirconium Ti/Zr dans la cible est de 64:36 en poids correspondant à 77:23 atomique. Le rapport de titane sur zirconium Ti/Zr dans la couche est quasiment équivalent à celui de la cible.

| **Tableau 1** | **Cibles employées** | **Pression dépôt** | **Gaz** | **Indice*** |
|---|---|---|---|---|
| Si₃N₄ sous Ag | Si:AI (92:8 % en pds) | 2-15^{∗}10⁻³ mbar | Ar:30-60 % - N₂:40-70 % | 2,00 |
| Si₃N₄ sur Ag | Si:AI (92:8 % en pds) | 2-15^{∗}10⁻³ mbar | Ar:30-60 % - N₂:40-70 % | 2,06 |
| NiCr | Ni:Cr (80:20 % at.) | 1-5^{∗}10⁻³ mbar | Ar à 100 % | - |
| Ag | Ag | 2-3^{∗}10⁻³ mbar | Ar à 100 % | - |
| TiO₂ | TiOx | 1,5^{∗}10⁻³ mbar | Ar 88 % - O₂ 12 % | 2,32 |
| TiZrO | TiZrOx | 2-4^{∗}10⁻³ mbar | Ar 90 % - O₂ 10 % | 2,32 |

| | | | | |
|---|---|---|---|---|
| at. : atomique ; pds : poids ; * : à 550 nm. | | | | |

Le tableau ci-dessous liste les matériaux et les épaisseurs physiques en nanomètres (sauf autres indications) de chaque couche ou revêtement qui constitue les empilements en fonction de leurs positions vis-à-vis du substrat porteur de l'empilement.

Les substrats revêtus d'empilements protégés selon l'invention sont trempables, bombables et n'ont pas besoin d'être margés lorsqu'ils sont montés en double vitrage.

| **Vitrage** | | **Comparatif** | **Invention** |
|---|---|---|---|
| Couche de protection supérieure | TiZrOx | - | 3 |
| | TiOx | 3 | - |
| Revêtement diélectrique | Si₃N₄ | 35 | 35 |
| Couche blocage OB | NiCr | 0,4 | 0,4 |
| Couche fonctionnelle | Ag | 7 | 7 |
| Couche blocage UB | NiCr | 0,7 | 0,7 |
| Revêtement diélectrique | Si₃N₄ | 35 | 35 |
| Substrat (mm) | verre | 4 | 4 |

### I. Résistance au test Haute Humidité et Cleveland

Afin de montrer l'amélioration de la durée de vie de l'empilement, un test Haute Humidité (HH) et un test de Cleveland (CV) sont réalisés.

Le test haute humidité (HH) consiste à stocker des échantillons à 95 % de l'humidité relative et à 40 °C et à observer la présence éventuelle de défauts tels que des piqures de corrosion.

Le test Cleveland consiste à soumettre le substrat revêtu au cycle suivant :
- montée en température en 45 min de 23°C à 56°C,
- maintien pendant 2 heures à 56°C et 95% d'humidité,
- descente en 1h30 de 56°C à -15 °C,
- maintien pendant 1 heure à -15 °C,
- montée en température en 45 min de -15 °C à 23 °C.

Les indicateurs d'appréciation suivants ont été utilisés pour constater les altérations éventuelles :
«+» : pas de défaut,
«0» : quelques points de corrosion,
«-» : présence de défauts.

| **Test** | | **Comparaison** | **Invention** |
|---|---|---|---|
| **HH** | 7 jours | - | + |
| | 56 jours | - | 0 |
| **CV** | 28-56 jours | - | + |
| | 56 jours | - | + |

Les matériaux comprenant la couche de protection selon l'invention résistent aux deux tests pendant au moins 56 jours alors que le matériau comparatif présente des défauts dès 7 jours au test HH et dès 26 jours au test CV. La solution de l'invention permet d'améliorer significativement la durée de vie du matériau notamment d'un facteur 2 ou 8 selon le test HH ou CV.

### II. Variations de propriétés électriques et colorimétriques

Les variations colorimétriques (ΔE) et les variations de résistance carré (ΔRsq) ont été évaluées :
- ΔE représente la variation entre les valeurs L*, a* et b* obtenues pour un substrat revêtu avant et après avoir subi un test HH ou CV. Les valeurs L*, a* et b* correspondant aux couleurs en réflexion, côté couches, dans le système LAB, mesurées selon l'illuminant D65 sont mesurées avant et après les tests. La variation est calculée de la façon suivante : ΔE = (Δa*² + Δb*² + ΔL*²)^{½}.
- ΔRsq correspond à la variation entre les valeurs de résistance par carré obtenues pour un substrat revêtu avant et après avoir subi un test HH ou CV. La résistance par carré (Rsq), correspondant à la résistance d'un échantillon de largeur égale à la longueur (par exemple 1 mètre) et d'épaisseur quelconque, est mesurée au Nagy.

| **Test** | | | **Comparaison** | **Invention** |
|---|---|---|---|---|
| HH | ΔE | 56 jours | 2,1 | 1,4 |
| | ΔRsq | 56 jours | 0,3 | 0,2 |
| CV | ΔE | 56 jours | 1,7 | 0,9 |
| | ΔRsq | 56 jours | 0,6 | 0,4 |

### III. Evaluation de la résistance mécanique

Afin d'évaluer la résistance mécanique de l'empilement différents tests ont été réalisés sur le matériau selon l'invention :
- Test Erichsen à la Brosse (EBT) avant et après trempe à 1000 cycles,
- Opel à 2000 cycles,
- Test de nettoyage.

Le test Erichsen à la Brosse (EBT) consiste à soumettre différents substrats revêtus avant (EBT) et après trempe (TT-EBT) à un certain nombre de cycles (1000) pendant lesquelles l'empilement recouvert d'eau est frotté à l'aide d'une brosse. On considère qu'un substrat satisfait au test si aucune marque n'est visible à l'œil nu. Le test avant trempe donne une bonne indication sur l'aptitude du vitrage à être rayé lors d'une opération de lavage. Le test après trempe donne une bonne indication sur la propagation des rayures après traitement thermique.

Le test Opel permet d'évaluer la résistance à l'abrasion. Il est réalisé conformément à la norme EN1096-2 à 2000 cycles.

Le test de nettoyage consiste à trois passages en machine à laver du substrat.

Le matériau selon l'invention satisfait à chacun de ses tests.

### IV. Evaluation de la résistance suite à un traitement thermique longue durée

Afin d'évaluer la résistance à des traitements thermiques longs, le matériau selon l'invention protégé d'une couche supérieure de protection en TiZrOx a été chauffé pendant 500 h à 400 °C. Aucune dégradation n'est observée.

Le tableau ci-dessous résume les principales caractéristiques optiques mesurées pour les substrats revêtus selon l'invention avant et après traitement thermique :
- L*R, a*R et b*R indiquent les couleurs en réflexion L*, a* et b* dans le système L*a*b* mesurées selon l'illuminant D65 à 2°, observateur du côté de l'empilement et mesurées ainsi perpendiculairement au vitrage,
- RL indique : la réflexion lumineuse dans le visible en %, mesurée selon l'illuminant D65 à 2° Observateur du côté de l'empilement ;
- L*T, a*T et b*T indiquent les couleurs en transmission L*, a* et b* dans le système L*a*b* mesurées selon l'illuminant D65 à 2° Observateur et mesurées ainsi perpendiculairement au vitrage ;
- TL indique : la transmission lumineuse dans le visible en %, mesurée selon l'illuminant D65 à 2° Observateur ;
- Abs. indique : l'absorption lumineuse dans le visible en %, mesurée selon l'illuminant D65 à 10° Observateur ;
- Rsq indique la résistance par carré.

| | **Couleur en réflexion** | | | **Couleur transmission** | | | **Facteurs %** | | | **Rsq** |
|---|---|---|---|---|---|---|---|---|---|---|
| | L*R | a*R | b*R | L*T | a*T | b*T | RL | TL | Abs | - |
| **Avant TT** | 23,7 | -0,83 | -9,05 | 92,81 | -1,9 | -0,48 | 4,01 | 82,53 | 13,46 | 9,43 |
| **Après TT** | 23,9 | -0,85 | -8,91 | 92,7 | 2,06 | -0,65 | 4,08 | 82,22 | 13,71 | 9,36 |
| **Variation** | ΔL*R | Δa*R | Δ b*R | ΔL*L | Δa*L | Δ b*L | ΔRL | ΔTL | Δabs | ΔRsq |
| | 0,2 | -0,02 | 0,14 | -0,11 | 0,16 | 0,17 | 0,07 | 0,31 | -0,25 | -0,07 |
| **ΔE** | 0,26 | | | | | | | | | |

Après traitement thermique, l'examen visuel du matériau selon l'invention ne permet pas d'apercevoir la présence de point de corrosion.

## Revendications

1. Matériau comprenant un substrat transparent revêtu d'un empilement de couches minces comprenant au moins une couche métallique fonctionnelle à base d'argent **caractérisé en ce que** l'empilement comprend :
- une couche diélectrique à base de nitrure de silicium et/ou d'aluminium ayant une épaisseur supérieure ou égale à 25 nm, située au-dessus d'une couche métallique fonctionnelle à base d'argent,
- une couche de protection supérieure à base d'oxyde de titane et de zirconium située au-dessus et au-contact de la couche diélectrique à base de nitrure de silicium et/ou d'aluminium, présentant un rapport en poids de titane sur zirconium Ti/Zr compris entre 60/40 et 80/20 et
**caractérisé en ce que** l'épaisseur totale de toutes les couches d'oxydes présentes dans l'empilement est inférieure à 10 nm.

2. Matériau selon la revendication 1 **caractérisé en ce que** la couche de protection supérieure a une épaisseur :
- inférieure ou égale à 5 nm, et/ou
- supérieure ou égale à 2 nm.

3. Matériau selon la revendication 1 ou 2 **caractérisé en ce que** la couche diélectrique à base de nitrure de silicium et/ou d'aluminium a une épaisseur inférieure ou égale à 50 nm.

4. Matériau selon l'une quelconque des revendications précédentes, **caractérisé en ce que** le rapport en poids de titane sur zirconium Ti/Zr est compris entre 60/40 et 70/30.

5. Matériau selon l'une quelconque des revendications précédentes, **caractérisé en ce que** l'empilement de couches minces comprend au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

6. Matériau selon l'une quelconque des revendications précédentes **caractérisé en ce que** l'empilement comprend au moins une couche de blocage située en-dessous et au-contact d'une couche métallique fonctionnelle à base d'argent.

7. Matériau selon l'une quelconque des revendications précédentes **caractérisé en ce que** l'empilement comprend au moins une couche de blocage située au-dessus et au-contact d'une couche métallique fonctionnelle à base d'argent.

8. Matériau selon l'une quelconque des revendications 6 à 7 **caractérisé en ce que** les couches de blocage sont à base d'un métal choisi parmi le niobium Nb, le tantale Ta, le titane Ti, le chrome Cr ou le nickel Ni ou à base d'un alliage obtenu à partir d'au moins deux de ces métaux.

9. Matériau selon l'une quelconque des revendications précédentes, **caractérisé en ce que** l'empilement comprend :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

10. Matériau selon l'une quelconque des revendications précédentes, **caractérisé en ce que** l'empilement comprend :
- un revêtement diélectrique situé en-dessous de la couche métallique fonctionnelle à base d'argent comprenant au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

11. Matériau selon l'une quelconque des revendications précédentes tel que le substrat est en verre, notamment silico-sodo-calcique.

12. Matériau selon l'une quelconque des revendications précédentes **caractérisé en ce qu'**au moins le substrat revêtu de l'empilement est bombé et/ou trempé.

13. Procédé d'obtention d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins une couche métallique fonctionnelle à base d'argent, puis
- on dépose au moins une couche diélectrique à base de nitrure de silicium et/ou d'aluminium ayant une épaisseur supérieure ou égale à 25 nm au-dessus de la couche métallique fonctionnelle à base d'argent,
- on dépose une couche de protection supérieure à base d'oxyde de titane et de zirconium présentant un rapport en poids de titane sur zirconium Ti/Zr compris entre 60/40 et 80/20 au-dessus et au contact de la couche diélectrique à base de nitrure de silicium et/ou d'aluminium et
**caractérisé en ce que** l'épaisseur totale de toutes les couches d'oxydes présentes dans l'empilement est inférieure à 10 nm.

14. Procédé selon la revendication 13 tel qu'il comprend en outre l'étape pendant laquelle on soumet le substrat revêtu de l'empilement de couches minces à un traitement thermique à une température supérieure à 400 °C.

## Patentansprüche

1. Material, umfassend ein mit einer Stapelung dünner Schichten, umfassend mindestens eine metallische Funktionsschicht auf Basis von Silber, beschichtetes transparentes Substrat, **dadurch gekennzeichnet, dass** die Stapelung Folgendes umfasst:
- eine dielektrische Schicht auf Basis von Siliciumnitrid und/oder von Aluminium mit einer Dicke von mindestens 25 nm, die sich über einer metallischen Funktionsschicht auf Basis von Silber befindet,
- eine obere Schutzschicht auf Basis von Titan- und Zirconiumoxid, die sich über und in Kontakt mit der dielektrischen Schicht auf Basis von Siliciumnitrid und/oder von Aluminium befindet, die ein Gewichtsverhältnis von Titan zu Zirconium Ti/Zr im Bereich zwischen 60:40 und 80:20 aufweist und
**dadurch gekennzeichnet, dass** die Gesamtdicke aller in der Stapelung vorhandenen Oxidschichten kleiner als 10 nm ist.

2. Material nach Anspruch 1, **dadurch gekennzeichnet, dass** die obere Schutzschicht eine Dicke aufweist:
- von höchstens 5 nm und/oder
- von mindestens 2 nm.

3. Material nach Anspruch 1 oder 2, **dadurch gekennzeichnet, dass** die dielektrische Schicht auf Basis von Siliciumnitrid und/oder Aluminium eine Dicke von höchstens 50 nm aufweist.

4. Material nach einem der vorstehenden Ansprüche, **dadurch gekennzeichnet, dass** das Gewichtsverhältnis von Titan zu Zirconium Ti/Zr im Bereich zwischen 60:40 und 70:30 liegt.

5. Material nach einem der vorstehenden Ansprüche, **dadurch gekennzeichnet, dass** die Stapelung von dünnen Schichten mindestens eine metallische Funktionsschicht auf Basis von Silber, mindestens zwei dielektrische Beschichtungen umfasst, wobei jede dielektrische Beschichtung mindestens eine dielektrische Schicht umfasst, sodass jede metallische Funktionsschicht zwischen zwei dielektrischen Beschichtungen angeordnet ist.

6. Material nach einem der vorstehenden Ansprüche, **dadurch gekennzeichnet, dass** die Stapelung mindestens eine Blockierschicht umfasst, die sich unter und in Kontakt mit einer metallischen Funktionsschicht auf Basis von Silber befindet.

7. Material nach einem der vorstehenden Ansprüche, **dadurch gekennzeichnet, dass** die Stapelung mindestens eine Blockierschicht umfasst, die sich über und in Kontakt mit einer metallischen Funktionsschicht auf Basis von Silber befindet.

8. Material nach einem der Ansprüche 6 bis 7, **dadurch gekennzeichnet, dass** die Blockierschichten auf einem Metall basieren, das aus Niob Nb, Tantal Ta, Titan Ti, Chrom Cr oder Nickel Ni oder einer Legierung ausgewählt ist, die ausgehend von mindestens zwei dieser Metalle erhalten wird.

9. Material nach einem der vorstehenden Ansprüche, **dadurch gekennzeichnet, dass** die Stapelung Folgendes umfasst:
- eine dielektrische Beschichtung, die sich unter der metallischen Funktionsschicht auf Basis von Silber befindet,
- gegebenenfalls eine Blockierschicht,
- eine metallische Funktionsschicht auf Basis von Silber,
- gegebenenfalls eine Blockierschicht,
- eine dielektrische Beschichtung, die sich über der metallischen Funktionsschicht auf Basis von Silber befindet,
- eine obere Schutzschicht.

10. Material nach einem der vorstehenden Ansprüche, **dadurch gekennzeichnet, dass** die Stapelung Folgendes umfasst:
- eine dielektrische Beschichtung, die sich unter der metallischen Funktionsschicht auf Basis von Silber befindet, umfassend mindestens eine dielektrische Schicht auf Basis von Siliciumnitrid und/oder Aluminium,
- gegebenenfalls eine Blockierschicht,
- eine metallische Funktionsschicht auf Basis von Silber,
- gegebenenfalls eine Blockierschicht,
- eine dielektrische Beschichtung, die sich über der metallischen Funktionsschicht auf Basis von Silber befindet, umfassend mindestens eine dielektrische Schicht auf Basis von Siliciumnitrid und/oder Aluminium,
- eine obere Schutzschicht.

11. Material nach einem der vorstehenden Ansprüche, wobei das Substrat aus Glas wie beispielsweise aus Kalknatronsilikatglas, besteht.

12. Material nach einem der vorstehenden Ansprüche, **dadurch gekennzeichnet, dass** mindestens das beschichtete Substrat der Stapelung gebogen und/oder gehärtet ist.

13. Verfahren zum Erhalten eines Materials, umfassend ein mit einer Stapelung aus dünnen Schichten, die durch Kathodenzerstäubung, gegebenenfalls durch Magnetfeld unterstützt, abgeschieden werden, beschichtetes transparentes Substrat, wobei das Verfahren die Abfolge der folgenden Schritte umfasst:
- Auftragen mindestens einer metallischen Funktionsschicht auf Basis von Silber auf das Substrat, danach
- Auftragen mindestens einer dielektrischen Schicht auf Basis von Siliciumnitrid und/oder von Aluminium mit einer Dicke von mindestens 25 nm über die metallische Funktionsschicht auf Basis von Silber,
- Auftragen einer oberen Schutzschicht auf Basis von Titan- und Zirconiumoxid, die ein Gewichtsverhältnis von Titan zu Zirconium Ti/Zr im Bereich zwischen 60:40 und 80:20 aufweist, über und in Kontakt mit der dielektrischen Schicht auf Basis von Siliciumnitrid und/oder Aluminium und
**dadurch gekennzeichnet, dass** die Gesamtdicke aller in der Stapelung vorhandenen Oxidschichten kleiner als 10 nm ist.

14. Verfahren nach Anspruch 13, wobei dies des Weiteren den Schritt umfasst, während welchem das mit der Stapelung dünner Schichten beschichtete Substrat einer thermischen Behandlung bei einer Temperatur von höher als 400 °C unterzogen wird.

## Claims

1. A material comprising a transparent substrate coated with a stack of thin layers comprising at least one silver-based functional metal layer, **characterized in that** the stack comprises:
- a dielectric layer based on silicon and/or aluminum nitride having a thickness higher than or equal to 25 nm, located above a silver-based functional metal layer,
- an upper protective layer based on zirconium titanium oxide located above and in contact with the dielectric layer based on silicon and/or aluminum nitride and exhibiting a ratio by weight of titanium to zirconium Ti/Zr of between 60/40 and 80/20 and
wherein the total thickness of all the layers of oxides present in the stack is less than 10 nm.

2. The material as claimed in claim 1, **characterized in that** the upper protective layer has a thickness:
- of less than or equal to 5 nm, and/or
- of greater than or equal to 2 nm.

3. The material as claimed in claim 1 or 2, **characterized in that** the dielectric layer based on silicon and/or aluminum nitride has a thickness of less than or equal to 50 nm.

4. The material as claimed in any one of the preceding claims, **characterized in that** the ratio by weight of titanium to zirconium Ti/Zr is between 60/40 and 70/30.

5. The material as claimed in any one of the preceding claims, **characterized in that** the stack of thin layers comprises at least one silver-based functional metal layer and at least two dielectric coatings, each dielectric coating comprising at least one dielectric layer, so that each functional metal layer is positioned between two dielectric coatings.

6. The material as claimed in any one of the preceding claims, **characterized in that** the stack comprises at least one blocking layer located below and in contact with a silver-based functional metal layer.

7. The material as claimed in any one of the preceding claims, **characterized in that** the stack comprises at least one blocking layer located above and in contact with a silver-based functional metal layer.

8. The material as claimed in either one of claims 6 and 7, **characterized in that** the blocking layers are based on a metal chosen from niobium Nb, tantalum Ta, titanium Ti, chromium Cr or nickel Ni or based on an alloy obtained from at least two of these metals.

9. The material as claimed in any one of the preceding claims, **characterized in that** the stack comprises:
- a dielectric coating located below the silver-based functional metal layer,
- optionally a blocking layer,
- a silver-based functional metal layer,
- optionally a blocking layer,
- a dielectric layer located above the silver-based functional metal layer,
- an upper protective layer.

10. The material as claimed in any one of the preceding claims, **characterized in that** the stack comprises:
- a dielectric coating located below the silver-based functional metal layer comprising at least one dielectric layer based on silicon and/or aluminum nitride,
- optionally a blocking layer,
- a silver-based functional metal layer,
- optionally a blocking layer,
- a dielectric coating located above the silver-based functional metal layer comprising at least one dielectric layer based on silicon and/or aluminum nitride,
- an upper protective layer.

11. The material as claimed in any one of the preceding claims, such that the substrate is made of glass, in particular soda-lime-silica glass.

12. The material as claimed in any one of the preceding claims, **characterized in that** at least the substrate coated with the stack is bent and/or tempered.

13. A process for obtaining a material comprising a transparent substrate coated with a stack of thin layers deposited by cathode sputtering, optionally assisted by magnetic field; the process comprises the sequence of following stages:
- at least one silver-based functional metal layer is deposited on the transparent substrate, then
- at least one dielectric layer based on silicon and/or aluminum nitride having a thickness higher than or equal to 25 nm, is deposited above the silver-based functional metal layer,
- an upper protective layer based on zirconium titanium oxide, exhibiting a ratio by weight of titanium to zirconium Ti/Zr of between 60/40 and 80/20, is deposited above and in contact with the dielectric layer based on silicon and/or aluminum nitride and
wherein the total thickness of all the layers of oxides present in the stack is less than 10 nm.

14. The process as claimed in claim 13, such that it additionally comprises the stage during which the substrate coated with the stack of thin layers is subjected to a heat treatment at a temperature of greater than 400°C.
